# FASCICULE DE BREVET EUROPEEN

(11) **EP 1 103 094 B1**
(45) Date de publication et mention de la délivrance du brevet: **29.05.2002**
(21) Numéro de dépôt: 99936664.4
(22) Date de dépôt: 02.08.1999
(51) Int. Cl.: H02G 15/105, H02G 15/188, G02B 6/44

(54) **DISPOSITIF DE PROTECTION D'UNE INTERRUPTION D'ECRAN DE CABLE ELECTRIQUE EQUIPE DE FIBRES OPTIQUES DISPOSEES DANS DES TUBES METALLIQUES**
VORRICHTUNG ZUM SCHUTZ EINER UNTERBRECHUNG DER ABSCHIRMUNG EINES MIT IN METALLISCHEN RÖHREN VERLEGTEN LICHTWELENLEITERN AUSGESTATTETEN ELEKTRISCHEN KABELS
DEVICE FOR PROTECTING FROM SHIELD INTERRUPTION AN ELECTRIC CABLE PROVIDED WITH OPTICAL FIBRES ARRANGED IN METAL TUBES

(30) Priorité: 07.08.1998 FR 9810205
(43) Date de publication de la demande: 30.05.2001
(73) Titulaire: SAGEM S.A., 75116 Paris (FR)
(72) Inventeur: MARTIN, Benoît, F-75012 Paris (FR)
(74) Mandataire: Fruchard, Guy
(86) Numéro de dépôt international: FR9901906
(87) Numéro de publication internationale: WO0008732

(56) Documents cités:
- EP-A- 0 393 552
- DE-A- 3 905 090
- DE-U- 9 416 349

## Description

La présente invention concerne un dispositif de protection d'une interruption d'écran de câble électrique équipé de fibres optiques disposés dans les tubes métalliques, selon le préambule de la revendication 1, qui est décrit dans le document EP-A-393 552.

On sait que les câbles haute tension, c'est-à-dire les câbles dont le conducteur central est destiné à être porté de plusieurs milliers de volts à plusieurs centaines de milliers de volts, comporte d'une façon générale un conducteur central entouré par une première couche conductrice entourée par une couche isolante recouverte d'une seconde couche conductrice elle-même entourée par un blindage métallique recouvert par une gaine externe. Lors de la réalisation d'une jonction entre deux câbles, il est parfois nécessaire d'interrompre l'écran conducteur et le blindage métallique et de prendre des dispositions pour éviter l'apparition de contraintes électriques qui provoqueraient une détérioration de l'isolant du câble. Parmi ces dispositions, on connaît la réalisation d'une jonction avec interruption d'écran consistant à disposer des éléments de réduction de contraintes électriques aux extrémités des écrans conducteurs et à réunir les blindages métalliques de plusieurs câbles adjacents par un circuit de liaisons croisées destinées à réduire les courants induits circulant dans les blindages métalliques des câbles transportant différentes phases d'un même courant. Une telle interruption d'écran avec liaisons croisées peut également être réalisée en dehors d'une jonction. Dans ce cas l'isolant du câble et le conducteur central ne sont pas sectionnées et l'interruption peut être de faible longueur. Cette technique est bien maîtrisée lorsque les câbles électriques sont des câbles comportant seulement un conducteur central.

Un problème particulier se pose lorsque le câble comporte en outre des fibres optiques contenues dans des tubes disposés à la périphérie du câble, généralement entre l'écran conducteur et le blindage métallique. En effet, afin de ne pas risquer une mise en tension des fibres optiques lors de la fabrication du câble, ce qui altèrerait leur propriété, il est préférable de disposer les fibres optiques dans des tubes métalliques qui sont au même potentiel que le blindage métallique du câble et posent donc les mêmes problèmes de contraintes électriques que les extrémités des blindages métalliques des câbles.

Afin de résoudre ce problème il est proposé dans le document EP-A-393 552 de réaliser une cassette d'épissurage épousant la forme du câble au voisinage de l'interruption d'écran et intégrée au dispositif de protection de l'interruption d'écran. Une telle solution est d'une mise en place malaisée sur un chantier. On a également envisagé d'interrompre le tube métallique entourant une fibre optique dans une partie de la jonction où le tube métallique est en contact avec l'écran conducteur du câble et de mettre la fibre optique dans un tube diélectrique depuis l'extrémité du tube métallique jusqu'à la cassette d'épissurage des fibres optiques. Ceci aurait permis de profiter des mêmes dispositions de réduction de contraintes que celles relatives aux extrémités de l'écran conducteur. Ceci suppose toutefois de dénuder la fibre optique sur une grande longueur correspondant sensiblement à la longueur de la jonction et il en résulte un risque très important de cisaillement de la fibre optique lors des manipulations, d'autant plus que ces manipulations ou de la mise en place des autres éléments de la jonction particulièrement en chantier où l'environnement général de travail rend souvent difficile la réalisation de tâches d'une minutie extrême.

Selon l'invention on propose un dispositif de protection d'une interruption d'écran de câble électrique équipé de fibres optiques disposées dans des tubes métalliques, le dispositif de protection comportant des éléments de réduction de contraintes électriques recouvrant l'interruption d'écran du câble, les fibres optiques étant reliées dans une cassette d'épissurage et les tubes métalliques des fibres optiques s'étendant jusqu'à la cassette d'épissurage caractérisé en ce que des organes réducteurs de contraintes sont disposés à l'extrémité des tubes métalliques.

Ainsi, les fibres optiques sont protégées jusqu'à la cassette d'épissurage de sorte qu'il suffit de les dénuder sur une faible longueur pour réaliser l'épissurage et compte tenu de la faible dimension des tubes contenant les fibres optiques, les contraintes électriques peuvent être réduites au moyen d'organes réducteurs de contraintes électriques de faibles dimensions utilisables dans des cassettes d'épissurage standards des fibres optiques.

Selon une version avantageuse de l'invention, les tubes métalliques sont lovés à l'entrée de la cassette d'épissurage. Ceci permet un mouvement relatif des tubes métalliques par rapport à la cassette d'épissurage sans que les fibres optiques soient mises en contrainte.

Selon une autre version avantageuse de l'invention, les organes réducteurs de contraintes électriques comportent au moins une pièce conductrice traversée par un canal allongé dans lequel s'étendent les extrémités des tubes métalliques. La mise en place des organes réducteurs de contraintes est ainsi rendue très aisée.

Selon un mode de réalisation préféré de l'invention, les organes réducteurs de contraintes électriques comportent deux plaques conductrices emboîtées l'une dans l'autre. Il est ainsi très aisé de disposer les extrémités des tubes métalliques sur l'une des plaques puis de refermer l'organe réducteur de contrainte par emboîtement de la seconde plaque avec la première.

Les objects et avantages de l'invention apparaîtront à la lecture de la description qui suit de deux modes de réalisation particuliers non limitatifs de l'invention, en référence aux figures ci-jointes parmi lesquelles :
- la figure 1 est une vue en coupe longitudinale d'une jonction de câble,
- la figure 2 est une vue de dessus de la cassette d'épissurage sans son couvercle,
- la figure 3 est une vue en coupe partielle agrandie d'un organe réducteur de contraintes selon la ligne III-III de la figure 2,
- la figure 4 est une vue en coupe longitudinale d'une extrémité d'un tube métallique selon la ligne IV-IV de la figure 3,
- les figures 5 et 6 sont des vues de la face interne des plaques formant un organe réducteur de contraintes selon un mode de réalisation préféré de l'invention.
- la figure 7 est une vue en coupe analogue à celle de la figure 1 d'une interruption d'écran en dehors d'une jonction.

En référence aux figures, la jonction à interruption d'écran comporte de façon classique un corps de jonction isolant 1 entourant un connecteur 2 réunissant les âmes conductrices 3 de deux câbles, le connecteur 2 étant lui-même recouvert par un écran de connexion 4 en polymère conducteur recouvrant le connecteur 2 et les extrémités des couches isolantes 27 des câbles réunis par la jonction. De façon également connue en soi, la jonction comporte deux déflecteurs 5 et 6 chacun en contact avec un écran conducteur 7 de l'un des câbles réunis par la jonction et allant en s'évasant vers le connecteur 2. Le déflecteur 5 est relié à une couche conductrice 8 qui s'étend sensiblement sur toute la longueur du corps de jonction jusqu'à l'aplomb du déflecteur 6 sans toutefois être en contact avec celui-ci. Les déflecteur 6 et l'extrémité adjacente de la couche conductrice 8 sont recouverts d'une couche isolante 26. Par ailleurs le blindage métallique 9 de chacun des câbles réunis par la jonction est associé à un câble de liaison croisée 10 réuni à un circuit de liaisons croisées non représenté.

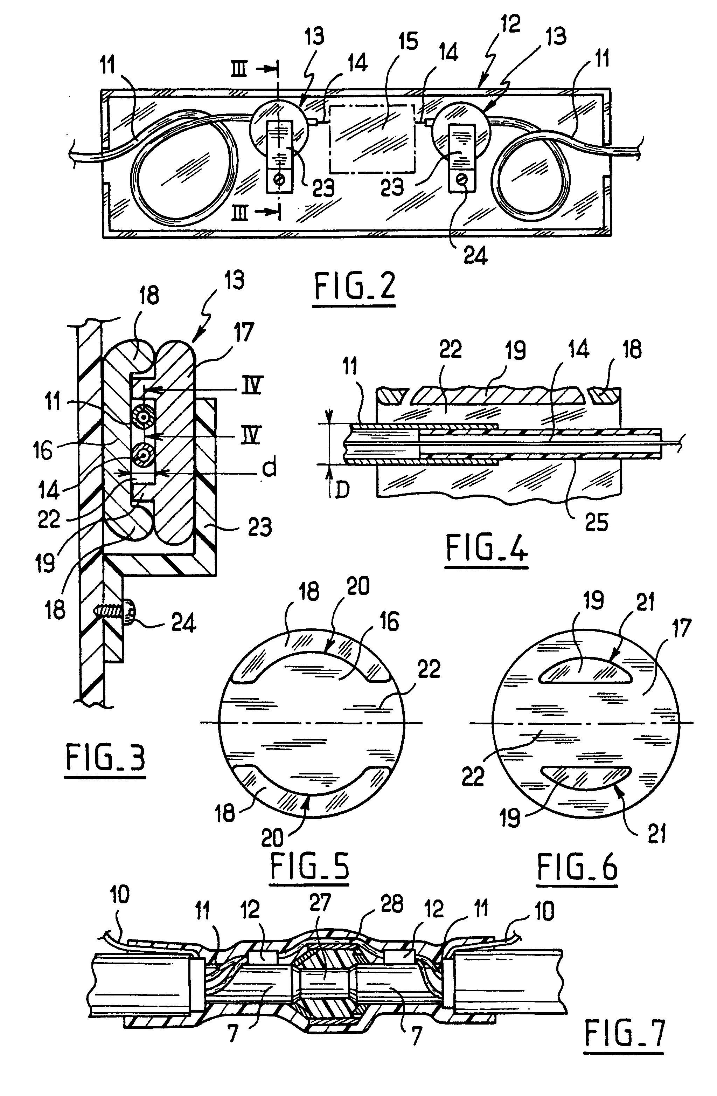

Il est prévu un dispositif de protection pour une interruption d'écran de câble électrique équipé de fibres optiques disposées dans des tubes métalliques 11 s'étendant entre l'écran conducteur 7 et le blindage métallique 9 du câble. Les tubes métalliques 11 s'étendent jusqu'à une cassette d'épissurage 12 et sont de préférence lovés à l'entrée de la cassette d'épissurage comme illustré sur la figure 2 sur laquelle un seul tube métallique 11 a été représenté pour chaque câble afin de ne pas surcharger la figure. Selon l'invention des organes réducteurs de contraintes électriques, généralement désignés en 13, sont disposés à l'extrémité des tubes métalliques 11 à l'intérieur de la cassette d'épissurage. A la sortie des organes réducteurs de contraintes 13, les fibres optiques dénudées 14 s'étendent vers une zone d'épissurage proprement dite 15 qui a été symbolisée par un bloc délimité par un trait mixte sur la figure 2, l'épissurage des fibres optiques étant réalisé de façon classique.

Selon le mode de réalisation préféré illustré par les figures 3 à 6, chaque organe réducteur de contraintes électriques comporte deux plaques circulaires 16 et 17 comportant des rebords, respectivement 18 et 19 en saillie vers l'intérieur et ayant des contours en arc de cercle, respectivement 20 et 21 s'emboîtant l'un dans l'autre pour délimiter un canal central 22. Les bords des plaques 16 et 17 sont de préférence arrondis afin de minimiser les risques d'apparition de contraintes électriques. Le diamètre externe des rebords 19 est de préférence légèrement inférieur au diamètre interne des rebords 18 afin de permettre un emboîtement aisé de la pièce 17 dans la pièce 16. Lorsque les pièces 16 et 17 sont emboîtées l'une dans l'autre et maintenues en appui l'une contre l'autre, la distance d (figure 3) séparant les faces en regard du canal 22 est de préférence légèrement inférieure au diamètre D (figure 4) des tubes 11 de façon à favoriser un contact des plaques 16 et 17 avec les tubes métalliques 11 par une déformation élastique de ceux-ci.

Les organes réducteurs de contraintes électriques 13 sont fixés dans la cassette d'épissurage 12 par une patte isolante 23 fixée par une vis isolante 24. On remarquera que la patte isolante 23 sert non seulement à maintenir l'organe réducteur de contraintes électriques 13 en place dans la cassette, mais également à maintenir les plaques 16 et 17 appliquées l'une contre l'autre de sorte que les rebords en arc de cercle 20 et 21 coopèrent l'un avec l'autre pour empêcher tout déplacement latéral de la plaque 17 par rapport à la plaque 16.

Afin d'éviter une détérioration de la fibre optique 14 par le bord extrême d'un tube 11 lors des manipulations d'épissurage, on prévoit de préférence d'engager un tronçon de tube isolant 25 (figure 4) dans les extrémités des tubes métalliques 11. Une gaine d'étanchéité est de préférence disposée dans la cassette 12 avant de refermer celle-ci.

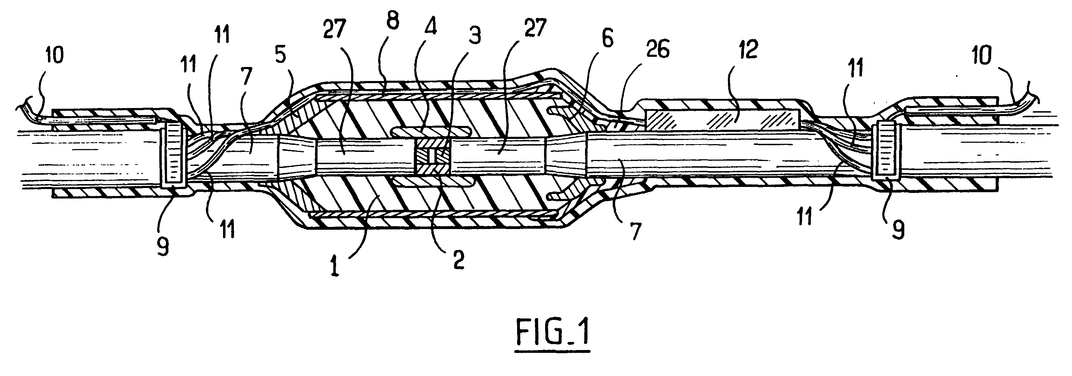

On remarquera que pour disposer d'une longueur suffisante de fibres optiques contenues dans les tubes métalliques 11 permettant un passage par dessus la jonction des âmes conductrices 3 et le lovage des tubes métalliques 11 dans la cassette d'épissurage il est nécessaire, lors de la préparation des câbles électriques avant d'effectuer la jonction, de sectionner la partie centrale de câble électrique, c'est-à-dire l'âme conductrice 3, la couche isolante 27 et l'écran conducteur 7 en retrait de l'extrémité des tubes métalliques 11, au moins pour l'un des câbles à relier (le câble de gauche sur la figure 1).

Dans le cas où une interruption d'écran avec liaisons croisées est effectuée en dehors d'une jonction, l'âme conductrice 3 et la couche isolante 27 ne sont pas sectionnées et il n'est donc pas possible de disposer d'une surlongueur de tube métallique 11. Il est toutefois nécessaire de sectionner les tubes métalliques 11 et les fibres optiques qu'ils contiennent afin d'accéder à l'écran conducteur 7 pour interrompre celui-ci. La figure 7 illustre un mode de réalisation d'une interruption d'écran de ce type. Dans ce cas on prévoit une cassette d'épissurage 12 associée à chaque extrémité d'un jeu de tubes métalliques 11 et les deux cassettes d'épissurage sont réunies par des fibres optiques rapportées disposées dans des tubes de raccordement 28.

Selon un mode de réalisation préféré de ce type d'interruption d'écran, les cassettes d'épissurage 12 sont en matière isolantes et les tubes de raccordement 28 sont également en matière isolante. Si nécessaire les tubes de raccordement 28 sont protégés contre l'écrasement par des entretoises longitudinales disposées sur le câble entre les tubes de raccordement 28.

Il suffit alors de prévoir un seul organe réducteur de contraintes 13 par cassette d'épissurage, cet organe réducteur de contrainte étant disposé pour recouvrir l'extrémité des tubes métalliques 11 tandis que les extrémités des tubes de raccordement 28 sont simplement maintenues par une patte isolante.

Bien entendu l'invention n'est pas limitée au mode de réalisation décrit et on peut y apporter des variantes de réalisation sans sortir du cadre de l'invention tel que défini par les revendications.

En particulier, bien que les organes réducteurs de contraintes selon l'invention aient été illustrés sous forme de deux plaques emboîtables, on peut réaliser des organes réducteurs de contraintes en une seule pièce comportant un canal allongé dans lequel les tubes métalliques 11 sont engagés en les rentrant légèrement en force.

Bien que les plaques 16 et 17 aient été illustrées sous une forme circulaire, on peut également réaliser des plaques présentant toute forme appropriée. A ce propos on notera que les organes réducteurs de contraintes 13 peuvent être soit des pièces métalliques soit des pièces conductrices en polymère ou en élastomère rendu conducteur.

Dans le cas où le canal 22 présente des dimensions transversales supérieures au diamètre des tubes métalliques 11 on peut prévoir d'assurer un contact par un mastic conducteur ou une colle conductrice.

On notera également que pour la mise en place du corps de jonction 1, l'un des câble (celui de droite sur la figure 1) est dénudé sur une plus grande longueur que l'autre câble. Afin de minimiser l'encombrement global de la jonction, on disposera donc de préférence la cassette d'épissurage 12 sur la partie dénudée de ce câble.

Afin de s'assurer de la longueur de tube isolant 25 s'étendant à l'intérieur du tube métallique 11, on peut prévoir sur la surface externe du tube isolant 25 un épaulement servant de repère et destiné à venir en butée sur l'extrémité du tube 11 correspondant.

Bien que les organes réducteurs de contraintes 13 aient été illustrés dans un mode de réalisation où ils sont disposés à l'intérieur de la cassette d'épissurage 12, les tubes métalliques 11 étant également lovés à l'intérieur de la cassette d'épissurage, on peut également prévoir de lover les tubes métalliques 11 à l'extérieur de la cassette d'épissurage 12 sur le côté de celui-ci et de disposer les organes réducteurs de contraintes à cheval sur la paroi de la cassette d'épissurage en les encastrant dans une ouverture de la paroi latérale, voire même à l'extérieur de la cassette d'épissurage dans le cas où les dimensions de la cassette d'épissurage sont très faibles.

Bien que l'invention ait été décrite en relation avec des tubes métalliques 11 en contact avec l'écran conducteur 8, on peut prévoir une couche isolante entre cet écran et les tubes métalliques. Bien que les tubes métalliques 11 aient été illustrés selon une disposition en nappe sur un côté de la jonction, on peut prévoir de les répartir tout autour de celle-ci.

## Revendications

1. Dispositif de protection d'une interruption d'écran d'au moins un câble électrique équipé de fibres optiques disposées dans des tubes métalliques (11), le dispositif de protection comportant des éléments (5, 6, 8) de réduction de contraintes électriques recouvrant l'interruption d'écran du câble, les fibres optiques étant reliées dans au moins une cassette d'épissurage (12) et les tubes métalliques (11) des fibres optiques s'étendant jusqu'à ladite cassette d'épissurage (12), **caractérisé en ce que** des organes réducteurs de contraintes électriques (13) sont disposés à l'extrémité des tubes métalliques.

2. Dispositif selon la revendication 1, **caractérisé en ce que** les tubes métalliques (11) sont lovés à l'entrée de la cassette d'épissurage (12).

3. Dispositif selon la revendication 1 ou la revendication 2, **caractérisé en ce que** les organes réducteurs de contraintes électriques (13) comportent au moins une pièce conductrice traversée par un canal allongé (22) dans lequel s'étendent les extrémités des tubes métalliques (11).

4. Dispositif selon la revendication 3, **caractérisé en ce que** les organes réducteurs de contraintes électriques (13) comportent deux plaques conductrices (16, 17) emboîtées l'une dans l'autre.

5. Dispositif selon la revendication 4, **caractérisé en ce que** les plaques conductrices (16, 17) comportent des rebords (18, 19) ayant des contours (20, 21) en arc de cercle.

6. Dispositif selon l'une des revendications précédentes, **caractérisé en ce que** les organes réducteurs de contraintes électriques (13) comportent des bords arrondis.

7. Dispositif selon l'une des revendications précédentes, **caractérisé en ce que** des tronçons de tubes isolants (25) sont engagés dans les extrémités des tubes métalliques (11).

8. Dispositif selon l'une des revendications précédentes, **caractérisé en ce qu'**au moins une dimension transversale (d) du canal (22) est inférieure au diamètre (D) des tubes métalliques (11).

9. Dispositif selon l'une des revendications précédentes, **caractérisé en ce qu'**il comporte deux cassettes d'épissurage chacune équipée d'un organe réducteur de contraintes électriques (13) disposé à une extrémité d'un jeu de tubes métalliques (11).

10. Dispositif selon la revendication 9, **caractérisé en ce que** les cassettes d'épissurage (12) sont en matière isolante et sont réunies par des tubes isolants (28) contenant des fibres optiques de raccordement.

## Patentansprüche

1. Vorrichtung zum Schutz einer Unterbrechung der Abschirmung mindestens eines elektrischen Kabels, das mit Lichtleitern ausgestattet ist, die in Metallrohren angeordnet (11) sind, wobei die Schutzvorrichtung Elemente (5, 6, 8) zum Senken der elektrischen Spannung umfaßt, welche die Unterbrechung der Kabelabschirmung abdecken, die Lichtleiter mit mindestens einer Kopplungskassette (12) verbunden sind, und sich die Metallrohre (11) der Lichtleiter bis zu der Kopplungskassette (12) erstrecken, **dadurch gekennzeichnet, daß** am Ende der Metallrohre Reduktionselemente (13) zum Senken der elektrischen Spannung angeordnet sind.

2. Vorrichtung nach Anspruch 1, **dadurch gekennzeichnet, daß** die Metallrohre (11) am Eingang der Kopplungskassette (12) eine Schleife bilden.

3. Vorrichtung nach Anspruch 1 oder 2, **dadurch gekennzeichnet, daß** die Reduktionselemente (13) zum Senken der elektrischen Spannung mindestens ein leitendes Teil umfassen, das von einem länglichen Kanal (22) durchsetzt ist, in dem die Enden der Metallrohre (11) verlaufen.

4. Vorrichtung nach Anspruch 3, **dadurch gekennzeichnet, daß** die Reduktionselemente (13) zum Senken der elektrischen Spannung zwei leitende Platten (16, 17) haben, die ineinandergesteckt sind.

5. Vorrichtung nach Anspruch 4, **dadurch gekennzeichnet, daß** die leitenden Platten (16, 17) Ränder (18, 19) mit kreisbogenförmigen Konturen (20, 21) haben.

6. Vorrichtung nach einem der vorhergehenden Ansprüche, **dadurch gekennzeichnet, daß** die Reduktionselemente (13) zum Senken der elektrischen Spannung abgerundete Kanten haben.

7. Vorrichtung nach einem der vorhergehenden Ansprüche, **dadurch gekennzeichnet, daß** isolierende Rohrabschnitte (25) in die Enden der Metallrohre (11) eingreifen.

8. Vorrichtung nach einem der vorhergehenden Ansprüche, **dadurch gekennzeichnet, daß** mindestens eine Querabmessung (d) des Kanals (22) geringer ist als der Durchmesser (D) der Metallrohre (11).

9. Vorrichtung nach einem der vorhergehenden Ansprüche, **dadurch gekennzeichnet, daß** diese zwei Kopplungskassetten umfaßt, die jeweils ein Reduktionselement (13) zum Senken der elektrischen Spannung haben, das an einem Ende eines Metallrohr-Satzes (11) angeordnet ist.

10. Vorrichtung nach Anspruch 9, **dadurch gekennzeichnet, daß** die Kopplungskassetten (12) aus einem isolierenden Material bestehen und über isolierende Rohre (28), die Verbindungslichtleiter enthalten, miteinander verbunden sind.

## Claims

1. A device for protecting at least one electric cable fitted with optical fibers placed in metal tubes (11) from an interruption of its screen, the protection device comprising electric stress reducing elements (5, 6, 8) covering the break in the screen of the cable, the optical fibers being connected in at least one splice box (12), and the metal tubes (11) of the optical fibers extending to said splice box (12), the device being **characterized in that** electric stress reducing members (13) are disposed at the ends of the metal tubes.

2. A device according to claim 1, **characterized in that** the metal tubes (11) are coiled at the inlet to the splice box (12).

3. A device according to claim 1 or claim 2, **characterized in that** the electric stress reducing members (13) comprise at least one conductive piece having an elongate channel (22) passing therethrough in which the ends of the metal tubes (11) extend.

4. A device according to claim 3, **characterized in that** the electric stress reducing members (13) comprise two conductive plates (16, 17) engaged one in the other.

5. A device according to claim 4, **characterized in that** the conductive plates (16, 17) have rims (18, 19) with circularly arcuate outlines (20, 21).

6. A device according to any preceding claim, **characterized in that** the electric stress reducing members (13) have rounded edges.

7. A device according to any preceding claim, **characterized in that** segments of insulating tubes (25) are engaged in the ends of the metal tubes (11).

8. A device according to any preceding claim, **characterized in that** at least one transverse dimension (d) of the channel (22) is less than the diameter (D) of the metal tubes (11).

9. A device according to any preceding claim, **characterized in that** it includes two splice boxes, each fitted with an electric stress reducing member (13) disposed at one end of a set of metal tubes (11).

10. A device according to claim 9, **characterized in that** the splice boxes (12) are made of insulating material and are united by insulating tubes (28) containing connection optical fibers.
